# EUROPEAN PATENT SPECIFICATION

(11) **EP 0 732 607 B1**
(45) Date of publication and mention of the grant of the patent: **13.10.2004**
(21) Application number: 95301761.3
(22) Date of filing: 16.03.1995
(51) Int. Cl.: G02C 5/22

(54) **Joints for spectacles sides**
Gelenke für Brillenbügel
Charnières pour branches de lunettes

(43) Date of publication of application: 18.09.1996
(73) Proprietor: NAKANISHI OPTICAL CORPORATION, Kita-ku Osaka (JP)
(72) Inventor: Nakanishi, Eiichi, Hyogo (JP)
(74) Representative: Boden, Keith McMurray

(56) References cited:
- DE-A- 3 837 180
- DE-U- 9 308 894
- DE-U- 9 417 374
- FR-A- 2 468 927
- US-A- 1 899 402
- US-A- 1 955 690

## Description

The invention relates to a joint for articulatingly mounting a side of a pair of spectacles.

One of the most popular joints currently employed for spectacles sides is a hinge which comprises a pair of butterfly wings, wherein one of the wings is attached to an end-piece secured to an outer edge of a lens rim, with the other wing attached to the side. The butterfly wings are connected one to another by a minute bolt so as to be rotatable relative to each other.

The minute bolt however tends to loosen and often becomes rickety during use of the spectacles. The wings of spectacles hinges cannot be shaped freely, thus imparting undue limitation to an ornamental variation thereof.

US-A-1,899,402 discloses a joint having the features of the preamble of Claim 1.

According to the invention there is provided a joint for articulatingly mounting a side of a pair of spectacles and comprising:
a pivotal member secured to an end-piece which is secured at one end to an outer edge of a lens rim;
a side having a front end engaging the pivotal member for rotational movement about the pivotal member; and
an annular groove formed around and in the outer periphery of the pivotal member;
wherein the front end of the side comprises an arcuate member rotatably engaging with the annular groove of the pivotal member, and the end-piece comprises a stop arranged to delimit the extent of rotation of the side;
characterized in that:
the end-piece and the side are both made of thin wire;
the front end of the wire of the side is C-shaped so as to provide the arcuate member; and
the other end of the wire of the end-piece is adjoined to the pivotal member and continues upwards beyond the annular groove so as to function as the stop.

Such a joint need include no bolt and can afford an improved ornamental design.

Such a joint enables the arcuate member to rotate around the outer periphery of the pivotal member so that the side can be opened and closed. The design of the pivotal member can be varied in appearance.

The invention is diagrammatically illustrated by way of example in the accompanying drawings, in which:
Figure 1 is a side elevation of a pair of spectacles incorporating joints according to one embodiment of the invention to mount sides;
Figure 2 is a top plan view of the spectacles of Figure 1;

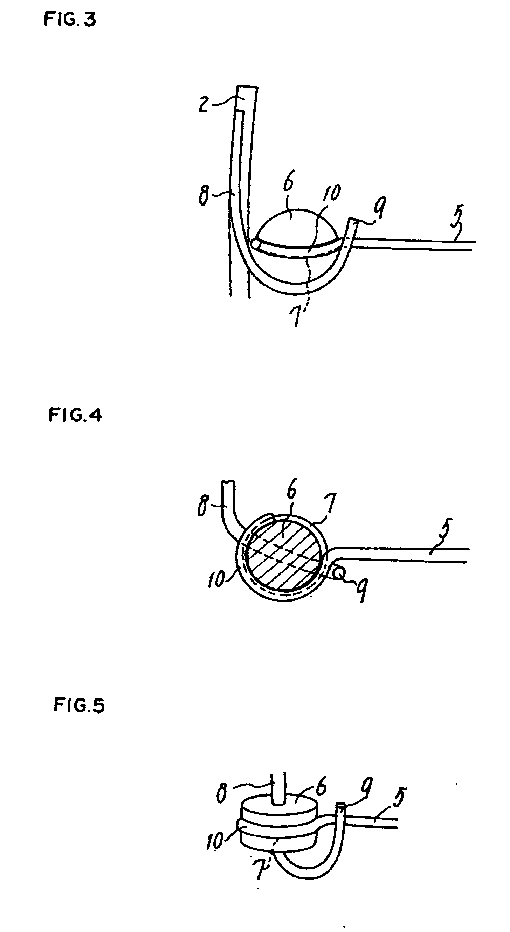

Figure 3 is an enlarged fragmentary side elevation showing a part of the spectacles of Figures 1 and 2;
Figure 4 is an enlarged plan view showing partly in cross-section said part of the spectacles of Figure 3; and
Figure 5 is a perspective view of part of another embodiment of a joint according to the invention.

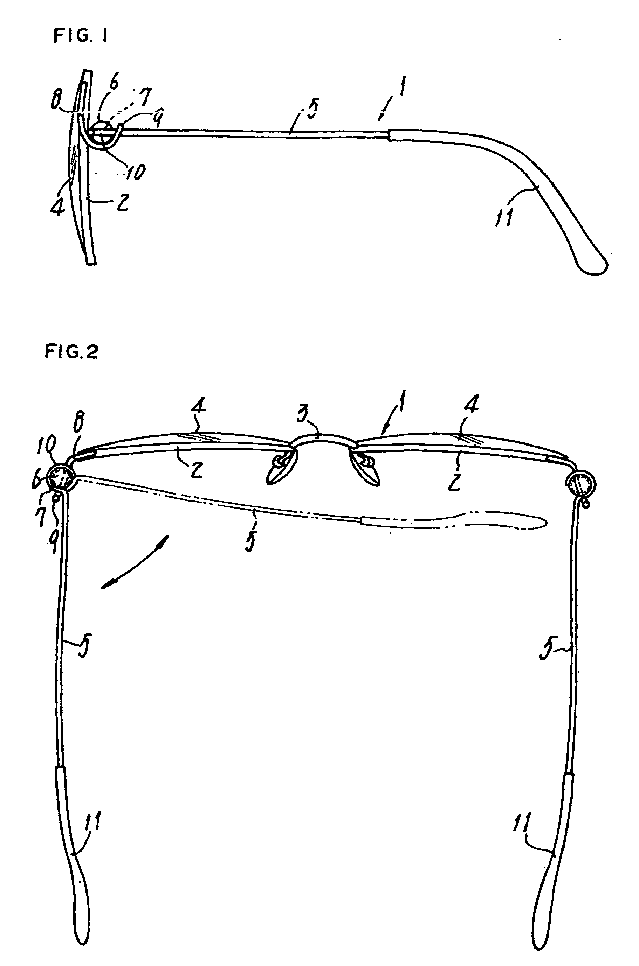

Referring to the drawings, Figures 1 and 2 show a pair of spectacles having a pair of right and lefthand lens rims 2 each fitting around a respective lens 4 and connected by a bridge 3 one to another. A respective side 5 is rotatably secured to the outer edge of each rim 2 in a manner different from prior art hinged structures.

A pivotal member 6, spherical in this embodiment, is mounted at an outer edge of the lens rim 2. An annular groove 7 is formed around and in the outer periphery of the pivotal member 6. In detail, the outer edge of the lens rim 2 is adjoined to one end of a small length of wire, i.e. an end-piece 8. The other end of the end-piece 8 is adjoined to the pivotal member 6 and continues upwards beyond the annular groove 7 so as to function as a stop 9 for the side 5 as detailed below. The side 5 is also made of a length of thin wire, and a curved front end of this wire is C-shaped so as to provide an arcuate member 10. This arcuate member 10 (serving as an integral annular lug) rotatably engages with the annular groove 7 of the pivotal member 6. Thus, each of the sides 5 can rotate with respect to and around the member 6 to adopt a closed position shown by broken lines in Figure 2. When the eyeglasses are used, each side 5 can be rotated towards its open position until stopped by the stop 9 of the end-piece 8, as illustrated by solid lines in Figures 1 and 2. The reference numeral 11 denotes earpieces which are made of a Celluloid (a Registered Trade Mark) or the like so as to rest on ears of a user.

Figure 5 shows another embodiment, wherein the pivotal member 6 is a short columnar piece of disc. The end-piece 8 in this case penetrates the centre of the pivotal member 6 and is secured thereto. The shapes of and connection between the pivotal member 6 and end-piece 8 can be modified so that a variety of designs are available to the sides 5 and their connected portions.

It will now be apparent that the joint provided herein to secure spectacles sides can be composed of a smaller number of parts and can be simpler in structure, so that the spectacles can be manufactured more easily and at a lower cost, as compared with prior art hinged structures of the sides.

In addition, the pivotal member as well as the arcuate member can be designed freely and in varied manners so as to improve the ornamental value of the spectacles.

## Claims

1. A joint for articulatingly mounting a side of a pair of spectacles and comprising:
a pivotal member (6) secured to an end-piece (8) which is secured at one end to an outer edge of a lens rim (2);
a side (5) having a front end engaging the pivotal member (6) for rotational movement about the pivotal member; and
an annular groove (7) formed around and in the outer periphery of the pivotal member (6);
wherein the front end of the side (5) comprises an arcuate member (10) rotatably engaging with the annular groove (7) of the pivotal member (6), and the end-piece (8) comprises a stop (9) arranged to delimit the extent of rotation of the side (5);
**characterized in that**:
the end-piece (8) and the side (5) are both made of thin wire;
the front end of the wire of the side (5) is C-shaped so as to provide the arcuate member (10); and
the other end of the wire of the end-piece (8) is adjoined to the pivotal member (6) and continues upwards beyond the annular groove (7) so as to function as the stop (9).

2. A joint according to Claim 1, wherein the pivotal member (6) is spherical.

3. A joint according to Claim 1, wherein the pivotal member (6) is a short columnar piece of disc.

## Patentansprüche

1. Gelenk für das gelenkige Montieren eines Brillenbügels, das aufweist:
ein Schwenkteil (6), das an einem Endstück (8) befestigt ist, welches an einem Ende an dem äußeren Rand (2) einer Brillenglasfassung angebracht ist,
einen Bügel (5), der ein vorderes Ende hat, welches mit dem Schwenkteil (6) für eine Drehbewegung um das Schwenkteil in Eingriff steht, und
eine ringförmige Nut (7), die um den und in dem äußeren Umfang des Schwenkteils (6) gebildet ist,
wobei das vordere Ende des Bügels (5) ein gebogenes Teil (10) aufweist, welches mit der ringförmigen Nut (7) des Schwenkteils (6) drehbar in Eingriff steht, und wobei das Endstück (8) einen Anschlag (9) aufweist, der so angeordnet ist, daß er das Ausmaß der Drehung des Bügels (5) begrenzt,
**dadurch gekennzeichnet, daß**:
das Endstück (8) und der Bügel (5) beide aus dünnem Draht hergestellt sind,
das vordere Ende des Drahts des Bügels (5) C-förmig ist, um das gebogene Teil (10) zu bilden, und
das andere Ende des Drahts des Endstücks (8) an das Schwenkteil (6) anstößt und sich nach oben über die ringförmige Nut (7) hinaus fortsetzt, um so als der Anschlag (9) zu dienen.

2. Gelenk nach Anspruch 1, wobei das Schwenkteil (6) kugelförmig ist.

3. Gelenk nach Anspruch 1, wobei das Schwenkteil (6) ein kurzes zylindrisches Stück einer Scheibe ist.

## Revendications

1. Charnière pour monter en articulation une branche d'une paire de lunettes et comprenant :
un élément pivotant (6) fixé à une pièce d'extrémité (8) qui est fixée à une extrémité à un bord externe d'un rebord de verre (2) ;
une branche (5) comportant une extrémité avant engageant l'élément pivotant (6) pour mouvement de rotation autour de l'élément pivotant (6) ; et
une rainure annulaire (7) formée autour, et dans la périphérie externe, de l'élément pivotant (6) ;
dans laquelle l'extrémité avant de la branche (5) comprend un élément arqué (10) s'engageant en rotation avec la rainure annulaire (7) de l'élément pivotant (6), et la pièce d'extrémité (8) comprend une butée (9) agencée pour délimiter l'étendue de rotation de la branche (5) ;
**caractérisée en ce que** :
la pièce d'extrémité (8) et la branche (5) sont toutes deux faites d'un mince fil métallique ;
l'extrémité avant du fil métallique de la branche (5) est en forme de C afin de constituer l'élément arqué (10) ; et
l'autre extrémité du fil métallique de la pièce d'extrémité (8) est adjacente à l'élément pivotant (6) et continue vers le haut au-delà de la rainure annulaire (7) pour servir de butée (9).

2. Charnière selon la revendication 1, dans laquelle l'élément pivotant (6) est sphérique.

3. Charnière selon la revendication 1, dans laquelle l'élément pivotant (6) est un court disque en forme de colonne.
